# EUROPEAN PATENT APPLICATION

(11) **EP 4 773 019 A1**
(43) Date of publication of application: **08.07.2026**
(21) Application number: 25220836.8
(22) Date of filing: 04.12.2025
(51) Int. Cl.: G06F 16/40

(54) **MEDIA DATA RECOMMENDATION METHOD AND APPARATUS, DEVICE, STORAGE MEDIUM, AND PROGRAM PRODUCT**

(30) Priority: 06.01.2025 CN 202510019680
(71) Applicant: Beijing Zitiao Network Technology Co., Ltd., Beijing 100190 (CN)
(72) Inventor: CAO, Peiyue, Beijing, 100028 (CN)
(74) Representative: Marks & Clerk LLP

(57) **Abstract**

The present application discloses a media data recommendation method and apparatus, a device, a storage medium, and a program product, which relate to the technical field of data recommendation. The method includes: acquiring a first interactive instruction for a first multimedia application, where the first interactive instruction is used to trigger display of a first page; and displaying the first page, where first recommendation information and a source of the first recommendation information are displayed in the first page, the first recommendation information is information associated with an associated object of the first multimedia application in a second multimedia application, and the associated object is used to represent an object having an association relationship with a current object of the first multimedia application. The present disclosure may solve the problem of media data recommendation.

## Description

### TECHNICAL FIELD

The present disclosure relates to the technical field of data recommendation, and in particular, to a media data recommendation method and apparatus, a device, a storage medium, and a program product.

### BACKGROUND

In related technologies, a multimedia application directly distributes recommendation information in an information flow to users. However, since there is little recommendation information in the information flow, the accuracy of recommendation is low.

### SUMMARY

In view of this, the present disclosure provides a media data recommendation method and apparatus, a device, a storage medium, and a program product to solve the problem of media data recommendation.

In a first aspect, the present disclosure provides a media data recommendation method. The method includes:
acquiring a first interactive instruction for a first multimedia application, where the first interactive instruction is used to trigger display of a first page; and
displaying the first page, where first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

In a second aspect, the present disclosure provides a media data recommendation apparatus. The apparatus includes:
an instruction acquiring module, configured to acquire a first interactive instruction for a first multimedia application, where the first interactive instruction is used to trigger display of a first page; and
a page display module, configured to display the first page, where first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

In a third aspect, the present disclosure provides an electronic device. The electronic device includes a memory and at least one processor, the memory and the at least one processor are communicatively connected to each other, the memory stores computer instructions, and the at least one processor executes the computer instructions to implement the media data recommendation method according to the above-mentioned first aspect.

In a fourth aspect, the present disclosure provides a non-transient computer-readable storage medium. The non-transient computer-readable storage medium stores computer instructions, and the computer instructions are configured to cause a computer to implement the media data recommendation method according to the above-mentioned first aspect.

In a fifth aspect, the present disclosure provides a computer program product, including computer instructions, and the computer instructions are configured to cause a computer to implement the media data recommendation method according to the above-mentioned first aspect.

According to the media data recommendation method provided by the embodiments of the present disclosure, on the one hand, the information associated with the associated object in the second multimedia application may be used to enrich the recommendation information in the information flow of the first multimedia application. On the other hand, since the user is more likely to have a common interest with the associated object, the user will also have higher degree of interest in the information associated with the associated object in the second multimedia application. Therefore, the accuracy of the recommendation information of the first multimedia application may be improved to some extent, so as to solve the problem of media data recommendation.

### BRIEF DESCRIPTION OF DRAWINGS

In order to more clearly explain the technical solutions in the specific embodiments of the present disclosure or in the prior art, the following will briefly introduce the drawings that need to be used in the description of the specific embodiments or the prior art. Obviously, the drawings in the following description are some implementations of the present disclosure. For those of ordinary skill in the art, other drawings may be obtained based on these drawings without creative efforts.
Fig. 1 is a schematic flowchart of a media data recommendation method according to an embodiment of the present disclosure;
Fig. 2 is a schematic diagram of a first page according to an embodiment of the present disclosure;
Fig. 3 is a schematic diagram of another first page according to an embodiment of the present disclosure;
Fig. 4 is a schematic diagram of a playlist according to an embodiment of the present disclosure;
Fig. 5 is a structural block diagram of a media data recommendation apparatus according to an embodiment of the present disclosure; and
Fig. 6 is a structural block diagram of an electronic device according to an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely below in combination with the drawings in the embodiments of the present disclosure. Obviously, the described embodiments are part of the embodiments of the present disclosure, but not all of the embodiments. Based on the embodiments in the present disclosure, all other embodiments obtained by those skilled in the art without making creative efforts belong to the scope of protection of the present disclosure.

It may be understood that before using the technical solutions disclosed in the embodiments of the present disclosure, the user should be informed of the type, scope of use, use scenarios, etc., of personal information involved in the present disclosure in an appropriate manner and the authorization of the user should be acquired in accordance with relevant laws and regulations.

For example, in response to receiving an active request from a user, prompt information is sent to the user to clearly prompt the user that the requested operation will require access to and use of the user's personal information. In this way, the user may independently choose whether to provide personal information to software or hardware such as an electronic device, an application, a server or a storage medium that performs the operations of the technical solutions of the present disclosure based on the prompt information.

As an optional but non-limiting implementation, in response to receiving the user's active request, the prompt information may be sent to the user in the form of, for example, a pop-up window, and the prompt information may be presented in text in the pop-up window. In addition, the pop-up window may also carry a selection control for the user to select "agree" or "disagree" to provide personal information to the electronic device.

It may be understood that the above process of notifying and obtaining user authorization is only illustrative and does not limit the implementation of the present disclosure, and other methods that meet relevant laws and regulations may also be applied to the implementation of the present disclosure.

It may be understood that the data involved in the technical solution (including but not limited to the data itself, acquisition or use of the data) should comply with requirements of corresponding laws, regulations and related provisions.

In related technologies, a multimedia application may directly distribute recommendation information to users through information flow (feed). However, the information flow only distributes recommendation information that matches the user's interests and preferences, resulting in relatively little recommendation information in the information flow and low accuracy of recommendation.

In view of this, according to an embodiment of the present disclosure, an embodiment of a media data recommendation method is provided. It should be noted that the steps shown in the flowchart of the drawings may be executed in a computer system such as a set of computer-executable instructions, and although a logical order is shown in the flowchart, in some cases, the steps shown or described herein may be executed in an order different from that presented here.

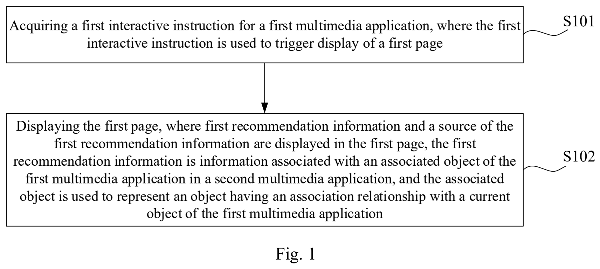

In this embodiment, a media data recommendation method is provided, which may be used for electronic devices, such as mobile phones, tablet computers, etc. Fig. 1 is a schematic flowchart of a media data recommendation method according to an embodiment of the present disclosure. As shown in Fig. 1, the process includes the following steps:

Step S101: acquiring a first interactive instruction for a first multimedia application, where the first interactive instruction is used to trigger display of a first page.

The first interactive instruction is generated when it is perceived that the user swipes information displayed by the first multimedia application. Alternatively, the first interactive instruction is generated when it is perceived that the user switches the information displayed by the first multimedia application.

Step S102: displaying the first page, where first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

The first multimedia application and the second multimedia application adopt a same object management system, or information is shared between an object management system of the first multimedia application and an object management system of the second multimedia application. Therefore, when the user logs in to both the first multimedia application and the second multimedia application with a same account, the associated object of the first multimedia application is determined through the object management system.

Optionally, the associated object includes objects with association relationships such as mutual follow and one-way follow. For the associated object with mutual follow and one-way follow, a highly influential associated object may be further determined from these associated objects according to the amount of information associated with the associated object in the second multimedia application. For example, if the associated object is associated with only one piece of information, the associated object is determined as a highly influential associated object.

Optionally, the information associated with the associated object in the second multimedia application includes information with which the associated object has performed an interaction operation in the second multimedia application, for example, information with which an interaction operation such as liking, commenting, collecting or sharing has been performed.

In practical applications, if there are a plurality of associated objects, first recommendation information of one associated object is randomly selected for display. Alternatively, the first recommendation information is displayed according to association relationships (such as marking as liked) between the associated objects and the first recommendation information. Alternatively, the newly posted first recommendation information is displayed according to the posting time of the first recommendation information. Alternatively, the first recommendation information played today is displayed according to the daily playback status of the first recommendation information by the associated object. The priority of the first recommendation information marked as liked is higher than that of the newly posted first recommendation information, and the priority of the newly posted first recommendation information is higher than that of the first recommendation information played today.

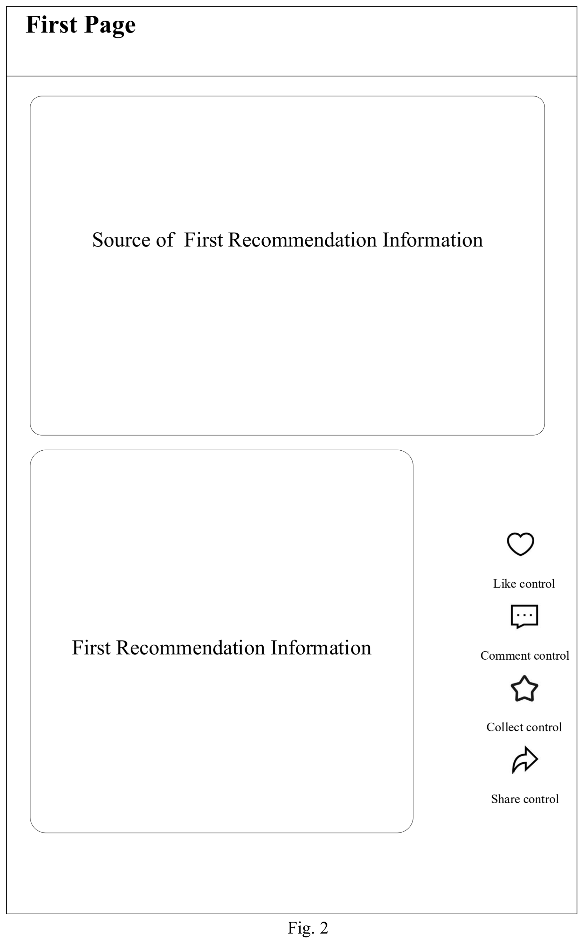

In addition, as shown in Fig. 2, interactive controls such as a like control, a comment control, a collect control and a share control are further displayed in the first page, and the user may mark the first recommendation information as liked, comment on the first recommendation information, collect the first recommendation information, share the first recommendation information, etc., by interacting with the interactive controls.

According to the media data recommendation method provided by the embodiment, on the one hand, the information associated with the associated object in the second multimedia application may be used to enrich the recommendation information in the information flow of the first multimedia application. On the other hand, since the user is more likely to have a common interest with the associated object, the user will also have higher degree of interest in the information associated with the associated object in the second multimedia application. Therefore, the accuracy of the recommendation information of the first multimedia application may be improved to some extent, so as to solve the problem of media data recommendation.

In some optional implementations, the first recommendation information is a music clip, the first multimedia application is a short video application, and the second multimedia application is a music application.

In some optional implementations, a first interactive region is further displayed in the first page, the first interactive region is used to display the source of the first recommendation information, and the source of the first recommendation information includes an identification of the associated object and recommendation text.

Optionally, the identification of the associated object includes an avatar, a nickname, etc., of the associated object.

In practical applications, the recommendation text may be determined according to an information type of the second multimedia application and the association relationship between the associated object and the first recommendation information. For example, if the second multimedia application is a music application, the recommendation text may be "liking this music", " following this music", "sharing this music", etc.

Further, for the identifications and the recommendation texts of the associated objects with different association relationships, different display modes may be adopted. For example, for an associated object with mutual follow, a display mode of "avatar + {nickname + recommendation text}" is adopted. For an associated object with one-way follow, a display mode of "avatar + your follows + nickname + recommendation text" is adopted. For a highly influential associated object, a display mode of "avatar + your follows + nickname + recommendation text" is adopted.

In addition, the source of the first recommendation information further includes an identification of the second multimedia application to which the first recommendation information belongs, etc., which is not limited here.

According to the media data recommendation method provided by this embodiment, the identification of the associated object of the first recommendation information and the recommendation text are displayed while the first recommendation information is displayed. Therefore, the credibility of the first recommendation information may be improved. Meanwhile, a separate first interactive region is designated to display the source of the first recommendation information, so that the readability of the source of the first recommendation information may also be improved.

In some optional implementations, a second interactive region is further displayed in the first page, and the second interactive region is used to display an identification of the second multimedia application and an identification of playback information to which the first recommendation information belongs.

Optionally, the identification of the second multimedia application includes an application logo, an application name, etc., of the second multimedia application.

Optionally, the identification of the playback information to which the first recommendation information belongs includes an information name, an information image (such as a cover), copyright information (such as an owner), etc., of the playback information to which the first recommendation information belongs, which may be adjusted according to an actual situation.

According to the media data recommendation method provided by this embodiment, the identification of the second multimedia application and the identification of the playback information to which the first recommendation information belongs are displayed while the first recommendation information is displayed, so that the credibility of the first recommendation information may be improved, and it is convenient to know the detailed information of the first recommendation information. Moreover, a separate second interactive region is designated to display the identification of the second multimedia application and the identification of the playback information to which the first recommendation information belongs, so that the readability of data may be improved to some extent.

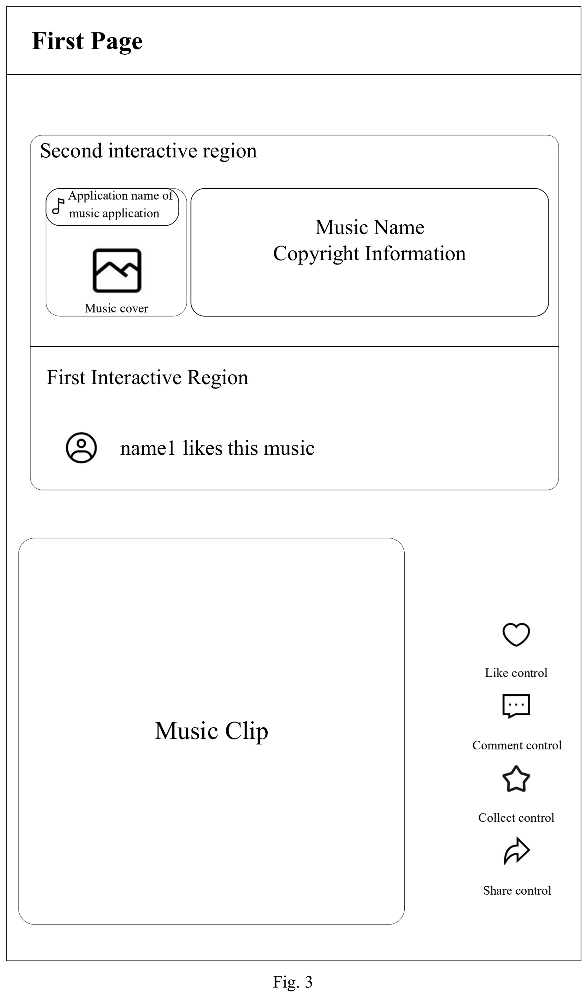

Exemplarily, in the case where the first multimedia application is a short video application, the second multimedia application is a music application, and the first recommendation information is a music clip, as shown in Fig. 3, the source of the music clip such as the avatar and the nickname (name1 in the figure) of the associated object and the recommendation text (liking this music in the figure) may be displayed in the first interactive region. The identification of the music application such as the application logo (music symbol in the figure) of the second multimedia application and the application name of the music application, and the identification of the playback information to which the music clip belongs such as the music name, the copyright information and the music cover of the music clip may be displayed in the second interactive region.

In some optional implementations, the first recommendation information only includes information collected by the associated object in the second media application.

In some optional implementations, the media data recommendation method further includes: acquiring a second interactive instruction for the first interactive region, where the second interactive instruction is used to trigger display of target playback information, and the target playback information is used to represent playback information that is associated with the associated object in the second multimedia application and is in a public state; and displaying the target playback information.

Optionally, if it is perceived that the user clicks on the first interactive region, the second interactive instruction is generated.

It should be noted that the target playback information only contains playback information that it has copyright and is risk-free.

According to the media data recommendation method provided by the embodiment, if the second interactive instruction for the first interactive region is detected, it indicates a higher degree of interest in the playback information that is associated with the associated object in the second multimedia application and is in the public state. Therefore, displaying the playback information that is associated with the associated object in the second multimedia application and is in the public state may further improve the accuracy of media data recommendation.

In some optional implementations, the target playback information is displayed in the form of a playlist, the region where the playlist is located includes a first region and a second region, and the target playback information in the first region is supported for playback in a player corresponding to the first multimedia application.

Optionally, the first region is a non-overlay region, and the second region is an overlay region.

The target playback information in the second region is not supported for playback in the player corresponding to the first multimedia application. If the target playback information in the second region needs to be played, it is necessary to jump to the second multimedia application for playing, so that the copyright of the target recommendation information of the second multimedia application may be well protected.

Optionally, the identification of the associated object and other recommendation text are further displayed at the head of the playlist. The other recommendation text is related to the information type of the second multimedia application. For example, if the second multimedia application is a music application, the other recommendation text may be "favorite music", etc.

Exemplarily, taking the nickname of the associated object being name1 as an example, the avatar of "name1" and "music liked by namel " are displayed at the head of the playlist.

A part of the region in the playlist is the first region, and the remaining region is the second region. For example, the upper half of the playlist is the first region, and the lower half of the playlist is the second region. The swiping operation for the target playback information, such as swiping up and down, is not supported in the playlist.

According to the media data recommendation method provided by this embodiment, in the playlist of the target playback information, the target playback information in the first region is supported for playback in the player corresponding to the first multimedia application. Therefore, the target playback information in the first region may be auditioned to determine the degree of interest in the target playback information of the associated object.

In some optional implementations, the display page of the target playback information further includes a trigger control, and the trigger control is used to trigger the starting of the second multimedia application and add at least one piece of target playback information to a playlist of the second multimedia application.

Optionally, the identification of the second multimedia application is displayed on the trigger control. In addition, corresponding recommendation text generated based on the identification of the second multimedia application may further be displayed. For example, taking the second multimedia application being a music application as an example, the recommendation text is "go to the music application to listen to other music".

After at least one piece of target playback information is added to the playlist of the second multimedia application, when the second multimedia application plays the target playback information, the identification of the associated object of the target playback information and the corresponding recommendation text are displayed.

For example, when the target playback information is a music, the identification of the associated object and the corresponding recommendation text are displayed on the music cover with a label anchor. For example, the avatar of the associated object namel and "name1 likes this music" are displayed.

According to the media data recommendation method provided by the embodiment, the trigger control is provided on the display page of the target playback information, and the trigger control may be used to trigger the starting of the second multimedia application and add one or more pieces of target playback information to the playlist of the second multimedia application. Therefore, it is possible to quickly jump to the second multimedia application to which the target playback information belongs and play the target playback information.

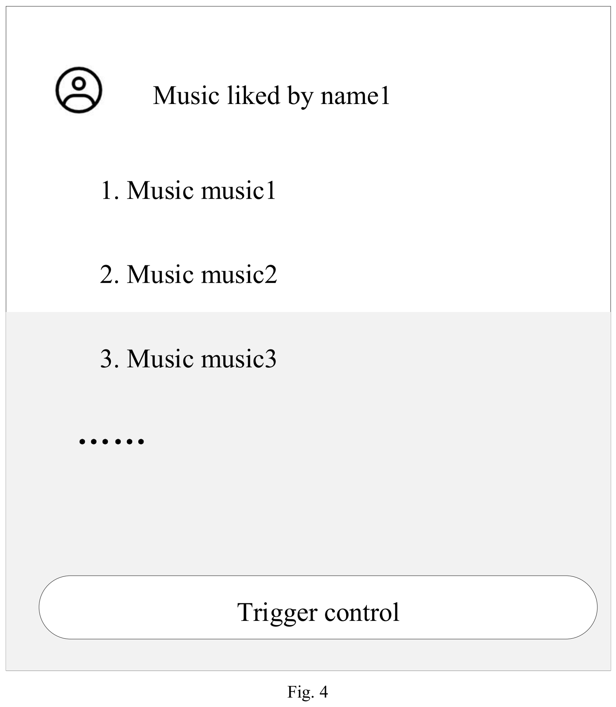

Exemplarily, taking the first multimedia application being a short video application and the second multimedia application being a music application as an example, as shown in Fig. 4, the target playback information is displayed in the form of a playlist on the display page of the target playback information. The avatar of "name1" and "music liked by name1" are displayed at the head of the playlist. Partial content of the target playback information is located in the first region, such as music "music1" and music "music2", and the rest of the target playback information is located in the second region, such as music "music3". The music "music1" and the music "music2" may be played in the player corresponding to the short video application. If the user wants to play the music "music3", it is necessary to click the trigger control to jump to the music application, and the music "music3" is played in the music application.

In some optional implementations, the first recommendation information is partial content of playback information to which the first recommendation information belongs, and the playback information is used to represent all content played in the second multimedia application.

According to the media data recommendation method provided by this embodiment, only partial content of the playback information to which the first recommendation information belongs is displayed, so that the copyright of the playback information may be effectively protected.

As a specific application example, a short video application is installed on a mobile phone, and the short video application may use the media data recommendation method of the present disclosure to display a music clip of a music that is liked, collected, shared, etc., by the associated object in the music application on the short video application. Alternatively, the playback information that is associated with the associated object in the music application and is in the public state is displayed in the short video application, the user may play partial content of the playback information in the short video application, and may also jump to the music application to play the rest of the playback information.

Therefore, the short video application using the media data recommendation method of the present disclosure may recall, in the information flow, a music for which an interaction operation such as liking, collecting or sharing is performed by the associated object in the music application. Since the associated object has a high influence on the user, recalling and displaying the music of the associated object may make the recommendation information of the short video application more accurate to some extent. Meanwhile, it is also possible to break the information cocoon caused by the original recommendation which is only based on the user's interests and preferences.

In an embodiment, a media data recommendation apparatus is further provided. The apparatus is used to implement the above-mentioned embodiments and preferred implementations, which will not be repeated here. As used below, the term "module" may implement a combination of software and/or hardware for a predetermined function. Although the apparatus described in the following embodiments is preferably implemented in software, implementation in hardware, or a combination of software and hardware is also possible and contemplated.

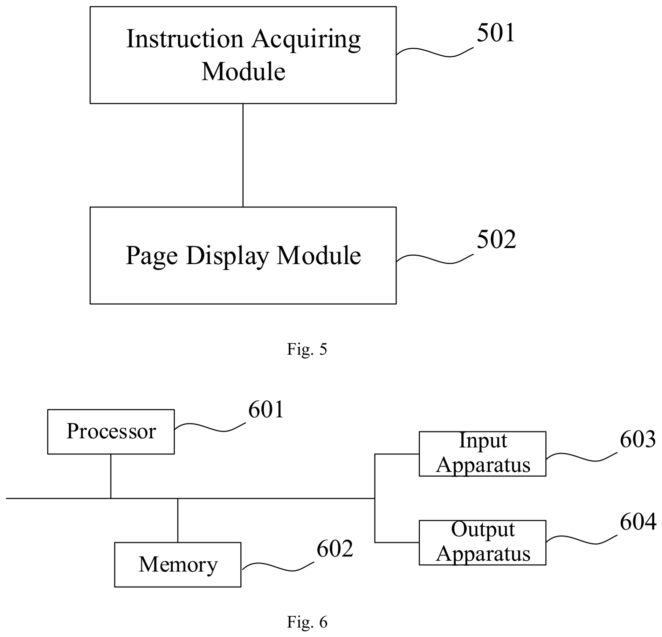

This embodiment provides a media data recommendation apparatus. As shown in Fig. 5, the apparatus includes:
an instruction acquiring module 501, configured to acquire a first interactive instruction for a first multimedia application, where the first interactive instruction is used to trigger display of a first page; and
a page display module 502, configured to display the first page, where first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

In some optional implementations, a first interactive region is further displayed in the first page, the first interactive region is used to display the source of the first recommendation information, and the source of the first recommendation information includes an identification of the associated object and recommendation text.

In some optional implementations, the media data recommendation apparatus further includes:
an information display module, configured to acquire a second interactive instruction for the first interactive region, where the second interactive instruction is used to trigger display of target playback information, and the target playback information is used to represent playback information that is associated with the associated object in the second multimedia application and is in a public state; and
an information playback module, configured to display the target playback information.

In some optional implementations, the target playback information is displayed in the form of a playlist, the region where the playlist is located includes a first region and a second region, and the target playback information in the first region is supported for playback in a player corresponding to the first multimedia application.

In some optional implementations, the display page of the target playback information further includes a trigger control, and the trigger control is used to trigger the starting of the second multimedia application and add at least one piece of target playback information to a playlist of the second multimedia application.

In some optional implementations, a second interactive region is further displayed in the first page, and the second interactive region is used to display an identification of the second multimedia application and an identification of playback information to which the first recommendation information belongs.

In some optional implementations, the first recommendation information is partial content of playback information to which the first recommendation information belongs, and the playback information is used to represent all content played in the second multimedia application.

In some optional implementations, the first recommendation information is a music clip, the first multimedia application is a short video application, and the second multimedia application is a music application.

Further functional descriptions of the above-mentioned modules and units are the same as those in the above-mentioned corresponding embodiments, and will not be repeated here.

The media data recommendation apparatus in this embodiment is presented in the form of a functional unit, and the unit here refers to an ASIC (Application Specific Integrated Circuit) circuit, a processor and a memory that execute one or more pieces of software or fixed programs, and/or other devices that may provide the above-mentioned functions.

An embodiment of the present disclosure further provides an electronic device, including the media data recommendation apparatus shown in Fig. 5.

Referring to Fig. 6, Fig. 6 is a structural block diagram of an electronic device provided by an optional embodiment of the present disclosure. As shown in Fig. 6, the electronic device includes: one or more processors 601, a memory 602, and interfaces for connecting various components, including high-speed interfaces and low-speed interfaces. The components communicate with each other by using different buses and may be installed on a common main board or in other ways as needed. The processor may process instructions executed within the electronic device, including instructions stored in or on the memory to display graphical information of GUI on an external input/output apparatus (such as a display device coupled to the interface). In some optional implementations, if required, multiple processors and/or buses may be used with multiple memories. Similarly, multiple electronic devices may be connected, and each device provides some necessary operations (for example, as a server array, a group of blade servers, or a multi-processor system). In Fig. 6, one processor 601 is taken as an example.

The processor 601 may be a central processing unit, a network processor or a combination thereof. The processor 601 may further include a hardware chip. The hardware chip may be an application specific integrated circuit, a programmable logic device or a combination thereof. The programmable logic device may be a complex programmable logic device, a field programmable logic gate array, a generic array logic, or any combination thereof.

The memory 602 stores instructions executable by at least one processor 601, so that the at least one processor 601 executes the method shown in the above-mentioned embodiments.

The memory 602 may include a program storage region and a data storage region, where the program storage region may store an operating system and an application program required by at least one function; the data storage region may store data created according to the use of the electronic device, etc. In addition, the memory 602 may include a high-speed random-access memory or a non-transitory memory, such as at least one magnetic disk storage device, a flash memory device, or other non-transitory solid-state storage devices. In some optional implementations, the memory 602 optionally includes memories remotely provided with respect to the processor 601, and these remote memories may be connected to the electronic device through a network. Examples of the above network include, but are not limited to, Internet, an intranet, a local area network, a mobile communication network, and a combination thereof.

The memory 602 may include a volatile memory, such as a random-access memory; the memory may also include a non-volatile memory, such as a flash memory, a hard disk or a solid-state disk; the memory 602 may also include a combination of the above-mentioned types of memories.

The electronic device further includes an input apparatus 603 and an output apparatus 604. The processor 601, the memory 602, the input apparatus 603 and the output apparatus 604 may be connected through a bus or in other ways. In Fig. 6, connection through a bus is taken as an example.

The input apparatus 603 may receive input digital or character information, and generate a key signal input related to user settings and function control of the electronic device, such as a touch screen, a keypad, a mouse, a track pad, a touch panel, an indicator stick, one or more mouse buttons, a trackball, a joystick, etc. The output apparatus 604 may include a display device, an auxiliary lighting apparatus (such as an LED), a tactile feedback apparatus (such as a vibration motor), etc. The above-mentioned display device includes, but is not limited to, a liquid crystal display, a light emitting diode, a displayer and a plasma displayer. In some optional implementations, the display device may be a touch screen.

An embodiment of the present disclosure further provides a computer-readable storage medium, and the method according to the embodiments of the present disclosure described above may be implemented in hardware and firmware, or implemented as computer code that may be recorded in a storage medium or originally stored in a remote storage medium or a non-transitory machine-readable storage medium and downloaded through a network and will be stored in a local storage medium, so that the method described herein may be stored in such software processing on a storage medium using a general-purpose computer, a dedicated processor, or programmable or dedicated hardware. The storage medium may be a magnetic disk, an optical disc, a read-only memory, a random-access memory, a flash memory, a hard disk or a solid-state disk, etc. Further, the storage medium may also include a combination of the above-mentioned types of memories. It may be understood that the computer, the processor, the microprocessor controller or the programmable hardware includes a storage component that may store or receive software or computer code, and when the software or computer code is accessed and executed by the computer, the processor or the hardware, the method shown in the above-mentioned embodiments is implemented.

A part of the present disclosure may be applied as a computer program product, such as computer program instructions, which, when executed by a computer, may invoke or provide the method and/or technical solution according to the present disclosure through the operation of the computer. Those skilled in the art should understand that the computer program instructions exist in the computer-readable medium in forms including, but not limited to, a source file, an executable file, an installation package file, etc. Accordingly, the computer program instructions are executed by the computer in manners including, but not limited to, the computer directly executing the instructions, or the computer compiling the instructions and then executing the corresponding compiled program, or the computer reading and executing the instructions, or the computer reading and installing the instructions and then executing the corresponding installed program. Here, the computer-readable medium may be any available computer-readable storage medium or communication medium that may be accessed by the computer.

Although the embodiments of the present disclosure are described in combination with the drawings, those skilled in the art may make various modifications and variations without departing from the spirit and scope of the present disclosure, and such modifications and variations fall within the scope defined by the appended claims.

## Claims

1. A media data recommendation method, comprising:
acquiring a first interactive instruction for a first multimedia application, wherein the first interactive instruction is used to trigger display of a first page; and
displaying the first page, wherein first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

2. The method according to claim 1, wherein a first interactive region is further displayed in the first page, the first interactive region is used to display the source of the first recommendation information, and the source of the first recommendation information comprises an identification of the associated object and recommendation text.

3. The method according to claim 2, further comprising:
acquiring a second interactive instruction for the first interactive region, wherein the second interactive instruction is used to trigger display of target playback information, and the target playback information is used to represent playback information that is associated with the associated object in the second multimedia application and is in a public state; and
displaying the target playback information.

4. The method according to claim 3, wherein the target playback information is displayed in a form of a playlist, a region where the playlist is located comprises a first region and a second region, and the target playback information in the first region is supported for playback in a player corresponding to the first multimedia application.

5. The method according to claim 3, wherein a display page of the target playback information further comprises a trigger control, and the trigger control is used to trigger starting of the second multimedia application and add at least one piece of the target playback information to a playlist of the second multimedia application.

6. The method according to claim 2, wherein a second interactive region is further displayed in the first page, and the second interactive region is used to display an identification of the second multimedia application and an identification of playback information to which the first recommendation information belongs.

7. The method according to claim 1, wherein the first recommendation information is partial content of playback information to which the first recommendation information belongs, and the playback information is used to represent all content played in the second multimedia application.

8. The method according to any one of claims 1 to 7, wherein the first recommendation information is a music clip, the first multimedia application is a short video application, and the second multimedia application is a music application.

9. A media data recommendation apparatus, comprising:
an instruction acquiring module, configured to acquire a first interactive instruction for a first multimedia application, wherein the first interactive instruction is used to trigger display of a first page; and
a page display module, configured to display the first page, wherein first recommendation information and a source of the first recommendation information are displayed in the first page, the first recommendation information is information associated with an associated object of the first multimedia application in a second multimedia application, and the associated object is used to represent an object having an association relationship with a current object of the first multimedia application.

10. An electronic device, comprising:
a memory and a processor, wherein the memory and the processor are communicatively connected to each other, the memory stores computer instructions, and
the computer instructions, when executed by the processor, cause the processor to implement the media data recommendation method according to any one of claims 1 to 8.

11. A computer-readable storage medium, comprising computer instructions stored thereon, wherein the computer instructions are configured to cause a computer to implement the media data recommendation method according to any one of claims 1 to 8.

12. A computer program product, comprising computer instructions, wherein the computer instructions are configured to cause a computer to implement the media data recommendation method according to any one of claims 1 to 8.
